# FASCICULE DE BREVET EUROPEEN

(11) **EP 3 003 631 B1**
(45) Date de publication et mention de la délivrance du brevet: **07.06.2023**
(21) Numéro de dépôt: 14731698.8
(22) Date de dépôt: 21.05.2014
(51) Int. Cl.: B23K 26/00, B23K 26/08

(54) **PROCEDE D'OBTENTION D'UN SUBSTRAT MUNI D'UN REVETEMENT**
VERFAHREN ZUR HERSTELLUNG EINES SUBSTRATS MIT EINER BESCHICHTUNG
METHOD FOR PRODUCING A SUBSTRATE PROVIDED WITH A COATING

(30) Priorité: 24.05.2013 FR 1354730
(43) Date de publication de la demande: 13.04.2016
(73) Titulaire: SAINT-GOBAIN GLASS FRANCE, 92400 Courbevoie (FR)
(72) Inventeur: NADAUD, Nicolas, F-75013 Paris (FR); MIMOUN, Emmanuel, F-75016 Paris (FR); DUBOST, Brice, F-75013 Paris (FR)
(74) Mandataire: Saint-Gobain Recherche
(86) Numéro de dépôt international: PCT/FR2014/051193
(87) Numéro de publication internationale: WO 2014/188127

(56) Documents cités:
- EP-A1- 0 959 051
- WO-A1-99/54961
- WO-A1-2012/066324
- HOLMER A-K: "SIMULTANEOUS MACHINING OF PARALLEL GROOVES IN SNO2 THIN FILMS USINGA ND:YAG LASER AND A KINOFORM", APPLIED OPTICS, OPTICAL SOCIETY OF AMERICA, WASHINGTON, DC; US, vol. 35, no. 15, 20 mai 1996 (1996-05-20), pages 2614-2618, XP000589864, ISSN: 0003-6935, DOI: 10.1364/AO.35.002614

## Description

La présente invention a trait à un procédé d'obtention d'un substrat muni, sur au moins une partie d'au moins une de ses faces, d'un revêtement comportant un motif à modulation spatiale d'au moins une propriété du revêtement. L'invention a également trait à une installation de traitement d'un substrat muni d'au moins un revêtement, en vue de créer un motif à modulation spatiale d'au moins une propriété du revêtement, et à un substrat muni, sur au moins une partie d'au moins une de ses faces, d'un revêtement comportant un motif à modulation spatiale d'au moins une propriété du revêtement.

Il est classique de munir des substrats, notamment en verre ou en matériau organique polymérique, de revêtements qui leur confèrent des propriétés particulières, notamment des propriétés optiques, par exemple de réflexion ou d'absorption de rayonnements d'un domaine de longueurs d'onde données, des propriétés de conduction électrique, ou encore des propriétés liées à la facilité de nettoyage ou à la possibilité pour le substrat de s'auto-nettoyer. Ces revêtements, qui peuvent être monocouches ou multicouches, sont généralement à base de composés inorganiques, notamment de métaux, d'oxydes, de nitrures ou de carbures. Ces revêtements peuvent être des couches minces ou des empilements de couches minces. Au sens de l'invention, on appelle couche mince une couche dont l'épaisseur est inférieure à un micromètre et varie généralement de quelques nanomètres à quelques centaines de nanomètres, d'où le qualificatif de "mince".

A titre d'exemples de revêtements conférant aux substrats des propriétés particulières, on peut citer :
- les revêtements qui modifient les propriétés de réflexion du substrat dans le domaine de longueurs d'onde du visible, tels que les couches métalliques réfléchissantes, notamment à base d'argent métallique, qui sont utilisées pour former les miroirs, ou encore les revêtements antireflets, qui visent à réduire la réflexion de rayonnement à l'interface entre l'air et le substrat. Un revêtement antireflet peut être formé, notamment, par une couche d'indice de réfraction compris entre l'indice de réfraction de l'air et l'indice de réfraction du substrat, telle qu'une couche mince ou une couche poreuse de type sol-gel, ou par un empilement de couches minces ayant des indices de réfraction alternativement plus faibles et plus forts jouant le rôle d'un filtre interférentiel à l'interface entre l'air et le substrat, ou encore par un empilement de couches minces présentant un gradient, continu ou échelonné, d'indices de réfraction entre l'indice de réfraction de l'air et celui du substrat ;
- les revêtements qui confèrent au substrat des propriétés de réflexion des rayonnements infrarouges, tels que les revêtements transparents comprenant au moins une couche mince métallique, notamment à base d'argent. Ces revêtements transparents à couche mince métallique sont utilisés pour former des vitrages à contrôle solaire, en particulier anti-solaires, visant à diminuer la quantité d'énergie solaire entrante, ou à faible émissivité, visant à diminuer la quantité d'énergie dissipée vers l'extérieur d'un bâtiment ou d'un véhicule ;
- les revêtements qui confèrent au substrat des propriétés de conduction électrique, tels que les revêtements comprenant au moins une couche mince métallique, notamment à base d'argent, ou les couches minces à base d'oxydes transparents électro-conducteurs (TCO), par exemple à base d'oxydes mixtes d'étain et d'indium (ITO), à base d'oxydes mixtes d'indium et de zinc (IZO), à base d'oxyde de zinc dopé au gallium ou à l'aluminium, à base d'oxyde de titane dopé au niobium, à base de stannate de cadmium ou de zinc, à base d'oxyde d'étain dopé au fluor et/ou à l'antimoine. Ces revêtements à propriétés de conduction électrique sont utilisés, notamment, dans des vitrages chauffants, où l'on fait circuler un courant électrique au sein du revêtement de manière à générer de la chaleur par effet Joule, ou encore en tant qu'électrode dans des dispositifs électroniques à couches, en particulier en tant qu'électrode transparente située en face avant de dispositifs à diode électroluminescente organique (OLED), de dispositifs photovoltaïques, de dispositifs électrochromes ;
- les revêtements qui confèrent au substrat des propriétés auto-nettoyantes, tels que les couches minces à base d'oxyde de titane, qui facilitent la dégradation des composés organiques sous l'action de rayonnements ultraviolets et l'élimination des salissures minérales sous l'action d'un ruissellement d'eau.

Pour certaines applications, il est souhaitable de modifier localement, par exemple de manière périodique, les propriétés d'un revêtement déposé sur un substrat de manière à obtenir un motif à modulation spatiale des propriétés du revêtement, qu'il s'agisse de propriétés optiques, de conduction électrique, ou autres. En particulier, on peut rechercher une modulation des propriétés optiques du revêtement pour modifier l'aspect visuel du substrat revêtu, à des fins esthétiques ou fonctionnelles. Par exemple, un vitrage dont le revêtement comporte un gradient de la couleur en réflexion, ou tout autre motif à modulation de la couleur en réflexion, peut être utilisé en tant que verre décoratif pour des applications intérieures ou extérieures. De même, un vitrage alternant des zones transparentes avec des zones réfléchissantes et/ou absorbantes peut être utilisé en tant que verre décoratif, ou bien en tant que cloison, notamment pour des bureaux ouverts de type "open space", permettant de définir des espaces privatifs au niveau des zones non transparentes du vitrage, tout en maintenant une bonne transmission de lumière au niveau des zones transparentes.

La modulation des propriétés optiques du revêtement peut également permettre d'ajuster la réponse optique du substrat revêtu vis-à-vis de certains rayonnements, et ainsi les performances du substrat. Par exemple, un vitrage de contrôle solaire dont le revêtement comporte un motif ajouré de réflexion des rayonnements infrarouges permet de contrôler le gain de chaleur solaire.

En dehors d'une modulation des propriétés optiques, on peut rechercher une modulation des propriétés de conduction électrique du revêtement, en vue de créer un motif ou une cartographie spécifique de conductivité sur le substrat. Par exemple, un vitrage comprenant une grille conductrice à sa surface peut être utilisée en tant qu'électrode pour un dispositif électronique en couches, notamment en tant qu'électrode transparente lorsque les espaces entre les mailles de la grille sont transparents, ou en tant que vitrage chauffant, ou encore peut jouer le rôle d'une surface équipotentielle transparente de type cage de Faraday.

En pratique, il est compliqué de mettre en place un motif à modulation d'une propriété d'un revêtement au cours du dépôt de celui-ci, notamment dans le cadre de procédés industriels. En particulier, si à l'heure actuelle il est relativement aisé de déposer des couches minces sur des grandes surfaces de substrat, notamment par pulvérisation cathodique assisté par champ magnétique, également appelé procédé "magnétron", il reste difficile de moduler spatialement les propriétés de ces couches minces en jouant sur les conditions de dépôt. L'utilisation de masques lors du dépôt de couches sur un substrat par le procédé magnétron pose des problèmes, notamment pour le maintien de la propreté du substrat, ce qui limite sa mise en oeuvre à l'échelle industrielle.

Il existe par ailleurs diverses techniques pour former un motif sur un revêtement, une fois qu'il a été déposé sur un substrat. Une première technique connue est le micro-usinage laser ("laser patterning"), dans laquelle on procède à l'ablation ou la vaporisation d'au moins une partie du revêtement par balayage avec un faisceau laser ponctuel comme décrit dans le document WO 2012/066324 A1. Cette technique est toutefois une technique locale, lente, qui est difficile à mettre en oeuvre pour des grandes tailles de substrats et qui impose un débit de production relativement faible. Une autre technique connue est la sérigraphie, qui permet d'opacifier une partie du substrat par dépôt d'un émail au travers d'un écran de sérigraphie ou par impression digitale. La technique de sérigraphie est toutefois limitée en résolution et nécessite un traitement thermique du substrat à une température d'au moins 600°C afin d'assurer la stabilité du produit émaillé, ce qui est pénalisant. Dans encore une autre technique connue, on met en place un masque de résine, par exemple photosensible, par lithographie ou sérigraphie sur le revêtement à traiter, puis on procède à l'ablation ou l'oxydation de la portion de revêtement non protégée par le masque de résine. Cette technique a l'inconvénient d'être un processus lent et coûteux, qui met en jeu des étapes multiples.

C'est à ces inconvénients qu'entend plus particulièrement remédier l'invention en proposant un procédé d'obtention d'un substrat muni d'un revêtement comportant un motif à modulation spatiale d'au moins une propriété du revêtement, qui est à la fois économique, simple et rapide, et qui permet d'atteindre des hauts débits de production, ce procédé garantissant un haut niveau de résolution pour la modulation des propriétés du revêtement et étant applicable même pour des grandes tailles de substrats, ce procédé étant en outre particulièrement flexible de manière à permettre, sur une ligne de production, des changements rapides dans la structure spatiale des propriétés du revêtement pour un même substrat ou d'un substrat à un autre.

A cet effet, l'invention a pour objet un procédé d'obtention d'un substrat muni, sur au moins une partie d'au moins une de ses faces, d'un revêtement comportant un motif à modulation spatiale d'au moins une propriété du revêtement, caractérisé en ce qu'il comprend une étape de traitement thermique, au moyen d'un rayonnement laser, d'un revêtement continu déposé sur le substrat, où le revêtement avant traitement thermique absorbe au moins partiellement le rayonnement laser, cette étape de traitement thermique étant telle qu'on irradie le substrat avec le rayonnement laser focalisé sur le revêtement sous la forme d'au moins une ligne laser, en conservant le revêtement continu et sans fusion du revêtement, et on impose un déplacement relatif du substrat et de la ligne laser focalisée sur le revêtement selon une direction transversale à la direction longitudinale de la ligne laser, tout en modulant temporellement au cours de ce déplacement relatif la puissance de la ligne laser en fonction de la vitesse de déplacement relatif et des dimensions du motif selon la direction de déplacement relatif.

Au sens de l'invention, une "ligne laser" est un faisceau laser focalisé sous la forme d'une ligne présentant une dimension longitudinale plus grande que sa dimension transversale, qui est généré par une ou plusieurs sources laser et dont tous les points selon la direction longitudinale de la ligne sont éclairés simultanément par la ou les sources laser. Ainsi, la ligne laser est obtenue par une irradiation au même instant de la totalité de la surface de la ligne par la ou les sources laser.

Au sens de l'invention, une direction est transversale à une autre direction lorsqu'elle forme un angle non nul avec cette autre direction. De plus, au sens de l'invention, un revêtement présent sur une partie d'une face d'un substrat est continu lorsqu'il recouvre sensiblement la totalité de cette partie. Selon l'invention, ce caractère continu du revêtement est préservé lors de l'étape de traitement thermique.

Lorsqu'on irradie avec un faisceau laser un revêtement déposé sur un substrat, où le revêtement absorbe au moins partiellement le rayonnement laser, on apporte une énergie suffisante pour provoquer une modification de la nature cristalline et/ou chimique du revêtement. En effet, l'énergie apportée favorise la cristallisation du revêtement, par un mécanisme physico-chimique de croissance cristalline autour de germes déjà présents dans le revêtement, en restant en phase solide. L'énergie apportée favorise également, lorsque le revêtement est en contact avec une atmosphère réactive, oxydante ou non, un changement de composition chimique du revêtement, par exemple par oxydation du revêtement en présence d'une atmosphère oxydante, ou encore par nitruration du revêtement en présence d'une atmosphère azotée. Cette modification de la nature cristalline et/ou chimique du revêtement induit généralement un changement d'au moins une propriété du revêtement, notamment parmi la conductivité électrique, l'émissivité, la transmission de rayonnement (notamment dans le visible et/ou l'infrarouge), la réflexion de rayonnement (notamment dans le visible et/ou l'infrarouge), l'absorption de rayonnement (notamment dans le visible et/ou l'infrarouge), le flou en transmission et/ou en réflexion, les coordonnées colorimétriques en réflexion et/ou en transmission, l'hydrophilie, ou encore l'activité photocatalytique du revêtement.

Les inventeurs ont tiré parti de ces effets de l'irradiation laser sur le revêtement pour former un motif à modulation d'au moins une propriété du revêtement. En pratique, le motif est obtenu selon l'invention en focalisant sur le revêtement au moins une ligne laser présentant une intensité adaptée dans le plan focal, et en modulant dans le temps la puissance de cette ligne laser tandis que le substrat et la ligne laser sont en déplacement relatif. Comme la puissance de la ligne laser change avec le temps, la ou les propriétés du revêtement sont modulées spatialement au cours du déplacement relatif.

Le procédé selon l'invention permet de créer, dans le revêtement, tout type de motif à modulation d'au moins une propriété du revêtement, en ajustant la modulation temporelle de la puissance de la ligne laser en fonction de la vitesse de déplacement relatif entre le substrat et la ligne laser et de la structure spatiale du motif souhaité. De manière avantageuse, ce procédé est applicable pour des substrats de toutes dimensions, y compris de grandes dimensions, la longueur de la ligne laser pouvant être simplement adaptée pour correspondre à la taille du motif souhaité. Le procédé permet de créer dans le revêtement des motifs de petites dimensions, de l'ordre de quelques dizaines de micromètres, ce qui est difficilement atteignable avec d'autres méthodes de traitement globales telles que la sérigraphie. La modulation temporelle de la puissance de la ligne laser peut être particulièrement rapide, ce qui permet d'atteindre à la fois des hauts niveaux de résolution et des hauts débits de production. Grâce à l'invention, il est possible d'obtenir rapidement un motif à modulation d'au moins une propriété du revêtement, même pour des grandes tailles de substrats, ce qui n'est pas le cas par balayage avec un faisceau laser ponctuel tel qu'utilisé pour le micro-usinage laser. En outre, grâce à la possibilité de moduler rapidement la puissance de la ligne laser, le procédé selon l'invention permet, sur une ligne de production, d'opérer des changements rapides dans la structure spatiale de modulation des propriétés du revêtement, que ce soit pour un même substrat ou d'un substrat à un autre sur la ligne.

Il est à noter que le procédé selon l'invention ne met pas en oeuvre de mécanisme de cristallisation par refroidissement à partir d'un matériau fondu, car cela nécessiterait de porter le revêtement à des températures extrêmement élevées pour obtenir sa fusion. De manière avantageuse, l'étape de traitement thermique selon l'invention ne chauffe que le revêtement, sans échauffement significatif de la totalité du substrat, ce qui rend le procédé applicable à des substrats en matériau organique polymérique. De plus, dans le cas de substrats en verre, il n'est ainsi plus nécessaire de procéder à un refroidissement lent et contrôlé du substrat avant la découpe ou le stockage du verre.

Le substrat est de préférence une feuille de verre, de vitrocéramique, ou d'un matériau organique polymérique. Il est de préférence transparent, incolore ou coloré. Le verre est de préférence de type silico-sodo-calcique, mais il peut également être en verre de type borosilicate ou alumino-borosilicate. Les matériaux organiques polymériques préférés sont le polycarbonate, le polyméthacrylate de méthyle, le polyéthylène téréphtalate (PET), le polyéthylène naphtalate (PEN), ou encore les polymères fluorés tels que l'éthylène tétrafluoroéthylène (ETFE). Le substrat peut être plan ou bombé, voire flexible.

Le substrat présente avantageusement au moins une dimension supérieure ou égale à 1 m, voire 2 m et même 3 m. De préférence, l'aire des faces principales du substrat est supérieure ou égale à 1 m², encore de préférence supérieure ou égale à 1,4 m². Dans un mode de réalisation avantageux, le substrat traité est parallélépipédique de longueur 1,3 m et de largeur 1,1 m. Dans le cas d'un substrat en verre, l'épaisseur du substrat varie généralement entre 0,5 mm et 19 mm, de préférence entre 0,7 mm et 9 mm, notamment entre 2 mm et 8 mm, voire entre 4 mm et 6 mm. Des substrats en matériau organique polymérique peuvent avoir des épaisseurs nettement plus faibles, par exemple comprises entre 25 et 100 µm.

Dans le cas d'un substrat en verre, celui-ci est de préférence du type flotté, c'est-à-dire susceptible d'avoir été obtenu par un procédé consistant à déverser le verre fondu sur un bain d'étain en fusion (bain "float"). Dans ce cas, le revêtement auquel est appliqué le traitement thermique selon l'invention peut aussi bien être déposé sur la face "étain" que sur la face "atmosphère" du substrat. On entend par faces "atmosphère" et "étain", les faces du substrat ayant été respectivement en contact avec l'atmosphère régnant dans le bain float et en contact avec l'étain fondu. La face étain contient une faible quantité superficielle d'étain ayant diffusé dans la structure du verre. Le substrat de verre peut également être obtenu par laminage entre deux rouleaux, technique permettant en particulier d'imprimer des motifs à la surface du verre.

Le revêtement auquel est appliqué le traitement thermique selon l'invention peut être monocouche ou multicouche, en particulier formé par un empilement de couches minces. Lorsque le revêtement est un empilement de couches, au moins une couche constitutive du revêtement absorbe au moins partiellement le rayonnement laser. De préférence, l'absorption d'au moins une couche constitutive du revêtement à la longueur d'onde du rayonnement laser est supérieure ou égale à 20%, notamment 30%. L'absorption d'une couche est définie comme étant égale à la valeur de 100% à laquelle sont soustraites la transmission et la réflexion de la couche. Dans le cadre de l'invention, lors du traitement thermique, une seule couche du revêtement peut être traitée ou plusieurs couches du revêtement peuvent être traitées. Ainsi, le procédé selon l'invention permet de générer une modulation spatiale des propriétés d'une ou de plusieurs couches constitutives du revêtement.

L'étape de traitement thermique selon l'invention est telle que la température de la face du substrat opposée à la face sur laquelle se trouve le revêtement traité n'excède pas 150°C pendant le traitement. De préférence, la température du substrat pendant le traitement thermique est inférieure ou égale à 100°C, notamment 50°C et même 30°C. Il s'agit notamment de la température au niveau de la face du substrat opposée à la face sur laquelle est déposé le revêtement traité. Cette température peut être mesurée par exemple par pyrométrie.

Cette caractéristique est due au fait qu'un traitement thermique réalisé au moyen d'un rayonnement laser présente un coefficient d'échange thermique très élevé, supérieur à 400 W/(m².s). De préférence, la puissance surfacique moyenne de la ligne laser est supérieure ou égale à 10³ W/cm², notamment supérieure ou égale à 10³ W/cm² lorsqu'elle est générée à l'aide d'une source laser pulsée, et supérieure ou égale à 10⁴ W/cm² lorsqu'elle est générée à l'aide d'une source laser opérant en mode continu (Continuous Wave, ou CW) ou quasi-continu (Quasi Continuous Wave, ou QCW). Cette forte densité d'énergie permet d'atteindre extrêmement rapidement la température souhaitée au niveau du revêtement traité, en général en un temps inférieur ou égal à une seconde, notamment de l'ordre de la milliseconde ou du dixième de milliseconde, et par conséquent de limiter d'autant la durée du traitement, la chaleur générée n'ayant alors pas le temps de diffuser au sein du substrat.

La ou chaque couche constitutive du revêtement est de préférence une couche mince à base d'au moins un métal, métalloïde, oxyde, nitrure, carbure, sulfure, ou d'un quelconque de leurs mélanges, notamment choisi parmi le titane, l'étain, le zirconium, le vanadium, le zinc, le tungstène, le tantale, le niobium, le molybdène, l'yttrium, le chrome, le manganèse, le fer, le cobalt, le nickel, le silicium, le bore, le cuivre, l'indium, l'or, l'argent, l'aluminium, un alliage de métaux choisis dans la liste précédente, l'oxyde de titane, les oxydes mixtes d'indium et de zinc ou d'étain, l'oxyde de zinc dopé à l'aluminium ou au gallium, les nitrures de titane, d'aluminium ou de zirconium, l'oxyde de titane dopé au niobium, le stannate de cadmium et/ou d'étain, l'oxyde d'étain dopé au fluor et/ou à l'antimoine. De préférence, la ou chaque couche constitutive du revêtement est une couche mince constituée d'un métal, métalloïde, oxyde, nitrure, carbure, sulfure, ou d'un quelconque de leurs mélanges.

Pour la plupart des couches listées ci-dessus, l'irradiation laser permet de modifier au moins une propriété de la couche en provoquant un changement de l'état de cristallisation de la couche.

Plus précisément, l'irradiation laser permet d'augmenter localement le taux de cristallisation de la couche, c'est-à-dire la proportion massique ou volumique de matière cristallisée, et la taille des grains cristallins (ou la taille de domaines cohérents de diffraction mesurés par des méthodes de diffraction des rayons X), voire dans certains cas de produire une forme cristallographique particulière.

Les couches d'argent ayant un taux de cristallisation élevé, et par conséquent une faible teneur résiduelle en argent amorphe, présentent une émissivité et une résistivité plus basses que des couches d'argent majoritairement amorphes. Le traitement thermique selon l'invention, appliqué à un substrat revêtu d'au moins une couche d'argent, avec un mouvement relatif entre le substrat et la ligne laser et une modulation temporelle adaptée de la puissance de la ligne laser, permet donc de créer un motif à modulation spatiale de la conductivité électrique et/ou de l'émissivité de la couche d'argent.

De même, les couches à base d'oxydes transparents électro-conducteurs (TCO) présentent une conductivité électrique d'autant plus forte que leur taux de cristallisation est élevé. Le traitement thermique selon l'invention, appliqué à un substrat revêtu d'au moins une couche à base de TCO, avec un mouvement relatif entre le substrat et la ligne laser et une modulation temporelle adaptée de la puissance de la ligne laser, permet donc de créer un motif à modulation spatiale de la conductivité électrique de la couche de TCO.

Dans le cas des vitrages à contrôle solaire ou à faible émissivité, le revêtement comprend généralement au moins une couche mince à base d'argent disposée entre deux couches minces diélectriques à base d'oxyde ou de nitrure. Peuvent être également disposées sous la couche d'argent une couche très fine destinée à favoriser le mouillage et la nucléation de l'argent, par exemple en oxyde de zinc ZnO, et sur la couche d'argent une seconde couche très fine, sacrificielle, par exemple en titane, destinée à protéger la couche d'argent au cas où le dépôt de la couche subséquente est réalisé dans une atmosphère oxydante ou en cas de traitements thermiques conduisant à une migration d'oxygène au sein de l'empilement. Les empilements peuvent également comprendre plusieurs couches d'argent, chacune de ces couches étant généralement affectée par la mise en oeuvre du traitement thermique selon l'invention. Dans le cas où l'empilement comprend une couche d'oxyde de zinc, le traitement de la couche d'argent s'accompagne aussi généralement d'une augmentation du taux de cristallisation de l'oxyde de zinc.

Dans le cas de l'oxyde de titane, il est connu que l'oxyde de titane cristallisé sous la forme anatase est bien plus efficace en terme de dégradation des composés organiques que l'oxyde de titane amorphe ou cristallisé sous la forme rutile ou brookite. Le revêtement à base d'oxyde de titane est de préférence une couche en oxyde de titane, éventuellement dopé. L'intégralité de la surface de cette couche est de préférence en contact avec l'extérieur de manière à ce que l'oxyde de titane puisse pleinement jouer sa fonction auto-nettoyante. Afin d'améliorer encore la cristallisation, le revêtement peut comprendre, sous la couche à base d'oxyde de titane, une sous-couche ayant pour effet de favoriser la croissance cristalline de l'oxyde de titane, notamment sous forme anatase.

Pour la plupart des couches listées précédemment, l'irradiation laser peut également permettre, lorsque la couche est en contact avec une atmosphère réactive, de modifier au moins une propriété de la couche en provoquant un changement de la composition chimique de la couche.

Ainsi, lorsque la couche traitée est une couche d'un matériau choisi parmi un métal M, un oxyde sous-stoechiométrique en oxygène du métal M, un nitrure du métal M, un carbure du métal M, un sulfure du métal M, et cette couche est en contact avec une atmosphère oxydante, l'irradiation laser permet d'obtenir localement une oxydation partielle de la couche. L'atmosphère oxydante est de préférence de l'air, notamment à la pression atmosphérique. Si besoin, la teneur en oxygène de l'atmosphère peut être augmentée afin de favoriser encore l'oxydation de la couche.

Dans certains cas, les couches métalliques ou de nitrure sont plus réfléchissantes ou absorbantes dans le domaine du visible que les couches d'oxyde correspondantes. Le traitement thermique selon l'invention, appliqué à un substrat revêtu d'au moins une couche métallique ou de nitrure alors que la couche est au contact d'une atmosphère oxydante, avec un mouvement relatif entre le substrat et la ligne laser et une modulation temporelle adaptée de la puissance de la ligne laser, permet alors de créer un motif à modulation spatiale de la réflexion lumineuse ou de l'absorption lumineuse de la couche. Cela permet d'obtenir une alternance de zones transparentes et de zones réfléchissantes ou absorbantes, distribuées selon un dessin prédéfini, avec la possibilité d'avoir des gradients de transmission lumineuse ou de réflexion lumineuse.

De même, les couches métalliques sont électro-conductrices, tandis que les couches d'oxyde sont isolantes. Le traitement thermique selon l'invention, appliqué à un substrat revêtu d'au moins une couche métallique alors que la couche est au contact d'une atmosphère oxydante, avec un mouvement relatif entre le substrat et la ligne laser et une modulation temporelle adaptée de la puissance de la ligne laser, permet donc de créer un motif à modulation spatiale de la conductivité électrique de la couche. Cela permet d'obtenir des zones conductrices, donc des électrodes, selon un dessin prédéfini, par exemple en forme de bandes ou encore de grilles. On peut ainsi créer des circuits imprimés transparents, par exemple en oxydant localement des couches conductrices en aluminium ou des couches semi-conductrices en silicium.

Par ailleurs, lorsque la couche traitée est une couche d'un matériau choisi parmi un métal M, un oxyde du métal M, un nitrure sous-stoechiométrique en azote du métal M, un carbure du métal M, un sulfure du métal M, et cette couche est en contact avec une atmosphère azotée non oxydante, l'irradiation laser permet d'obtenir localement une nitruration partielle de la couche. Pour effectuer une telle nitruration partielle, le gaz réactif peut être choisi, notamment, parmi N₂, N₂O, NH₃ ou NOx.

De manière plus générale, lorsque la couche traitée est une couche d'un matériau choisi parmi un métal M, un oxyde du métal M, un nitrure du métal M, un carbure du métal M, un sulfure du métal M, et cette couche est en contact avec une atmosphère réactive non oxydante, il est possible de modifier localement la composition chimique de la couche par d'autres réactions que l'oxydation ou la nitruration, par exemple par une hydrogénation partielle de la couche, notamment avec SiH₄ comme gaz réactif, ou encore par une carburation partielle de la couche sous une atmosphère carbonée, notamment avec l'éthylène C₂H₂ ou le méthane CH₄ comme gaz réactifs. Par "atmosphère réactive non oxydante", on entend ici que l'atmosphère est constituée d'au moins un gaz réactif qui provoque une réaction avec les éléments constitutifs de la couche, la réaction n'étant pas une oxydation de la couche. Une telle atmosphère n'est pas pour autant obligatoirement exempte d'oxygène et des traces d'oxygène peuvent être éventuellement présentes.

De préférence, la ligne laser utilisée dans l'étape de traitement thermique selon l'invention est générée par des modules comprenant une ou plusieurs sources laser, ainsi que des optiques de mise en forme et de redirection.

Les sources laser sont classiquement des diodes laser ou des lasers à fibre ou à disque. Les diodes laser permettent d'atteindre de manière économique de fortes densités de puissance par rapport à la puissance électrique d'alimentation, pour un faible encombrement. L'encombrement des lasers à fibre est encore plus réduit, et la puissance linéique obtenue peut être encore plus élevée, pour un coût toutefois plus important.

On entend par lasers fibres des lasers dans lesquels le lieu de génération de la lumière laser est déporté spatialement par rapport à son lieu de délivrance, la lumière laser étant délivrée au moyen d'au moins une fibre optique.

Dans le cas d'un laser à disque, la lumière laser est générée dans une cavité résonnante dans laquelle se trouve le milieu émetteur qui se présente sous la forme d'un disque, par exemple un disque mince (d'environ 0,1 mm d'épaisseur) en Yb:YAG. La lumière ainsi générée est couplée dans une ou plusieurs fibres optiques qui sont dirigées vers le lieu de traitement.

La longueur d'onde du rayonnement de la ou chaque ligne laser est avantageusement comprise dans un domaine allant de 100 nm à 2000 nm, notamment de 100 à 350 nm ou de 800 à 1000 nm. En fonction du spectre d'absorption du revêtement traité, il peut être approprié d'utiliser des diodes laser de puissance émettant à une longueur d'onde choisie parmi 808 nm, 880 nm, 915 nm, 940 nm ou 980 nm, ou bien des lasers à excimère émettant un rayonnement dans le domaine de l'ultraviolet, entre 100 nm et 350 nm, notamment entre 240 nm et 300 nm. En variante, la longueur d'onde du rayonnement de la ou chaque ligne laser peut être comprise dans un domaine allant de 5 µm à 15 µm, ce qui peut être obtenu à l'aide de lasers à CO₂, pour des revêtements absorbant un tel rayonnement. Dans le cas d'un laser à disque, la longueur d'onde est par exemple de 1030 nm (longueur d'onde d'émission pour un laser Yb :YAG). Pour un laser à fibre, la longueur d'onde est par exemple de 1070 nm.

Dans le cas de sources laser non fibrées, les optiques de mise en forme et de redirection comprennent de préférence des lentilles et des miroirs, et sont utilisées comme moyens de positionnement, d'homogénéisation et de focalisation du rayonnement. Les moyens de positionnement ont pour fonction de disposer selon une ligne les rayonnements émis par les sources laser. Ils comprennent de préférence des miroirs. Les moyens d'homogénéisation ont pour fonction de superposer les profils spatiaux des sources laser afin d'obtenir une puissance linéique homogène tout au long de la ligne. Les moyens d'homogénéisation comprennent de préférence des lentilles permettant la séparation des faisceaux incidents en faisceaux secondaires et la recombinaison desdits faisceaux secondaires en une ligne homogène. Les moyens de focalisation du rayonnement permettent de focaliser le rayonnement sur le revêtement à traiter, sous la forme d'une ligne de longueur et de largeur voulues. Les moyens de focalisation comprennent de préférence une lentille convergente.

Dans le cas de sources laser fibrées, les optiques de mise en forme sont de préférence regroupées sous la forme d'une tête optique positionnée à la sortie de la ou chaque fibre optique. Les optiques de mise en forme desdites têtes optiques comprennent de préférence des lentilles, des miroirs et des prismes et sont utilisées comme moyens de transformation, d'homogénéisation et de focalisation du rayonnement. Les moyens de transformation comprennent des miroirs et/ou des prismes et servent à transformer le faisceau circulaire, obtenu en sortie de la fibre optique, en un faisceau non circulaire, anisotrope, en forme de ligne. Pour cela, les moyens de transformation augmentent la qualité du faisceau selon l'un de ses axes (axe rapide, ou axe de la largeur de la ligne laser) et diminuent la qualité du faisceau selon l'autre (axe lent, ou axe de la longueur de la ligne laser). Les moyens d'homogénéisation superposent les profils spatiaux des sources laser afin d'obtenir une puissance linéique homogène tout au long de la ligne. Les moyens d'homogénéisation comprennent de préférence des lentilles permettant la séparation des faisceaux incidents en faisceaux secondaires et la recombinaison desdits faisceaux secondaires en une ligne homogène. Enfin, les moyens de focalisation du rayonnement permettent de focaliser le rayonnement au niveau du plan de travail, c'est-à-dire dans le plan du revêtement à traiter, sous la forme d'une ligne de longueur et de largeur voulues. Les moyens de focalisation comprennent de préférence un miroir focalisant ou une lentille convergente.

Les optiques de mise en forme et de redirection, notamment les moyens de positionnement, peuvent être ajustées manuellement ou à l'aide d'actuateurs permettant de régler leur positionnement à distance. Ces actuateurs, qui sont généralement des moteurs ou des cales piézoélectriques, peuvent être commandés manuellement et/ou être réglés automatiquement. Dans ce dernier cas, les actuateurs seront de préférence connectés à des détecteurs, ainsi qu'à une boucle de rétroaction.

Au moins une partie des modules laser, voire leur totalité, est de préférence disposée en boîte étanche, avantageusement refroidie, notamment ventilée, afin d'assurer leur stabilité thermique.

Dans le cadre de l'invention, on désigne par "longueur" de la ligne laser la plus grande dimension de la ligne laser, c'est-à-dire la dimension de la ligne laser selon sa direction longitudinale, et par "largeur" de la ligne laser la dimension de la ligne laser selon une direction perpendiculaire à sa direction longitudinale. Comme il est d'usage dans le domaine des lasers, la largeur w de la ligne laser correspond à la distance, selon cette direction perpendiculaire, entre l'axe du faisceau, où l'intensité du rayonnement est maximale, et le point où l'intensité du rayonnement est égale à 1/e² fois l'intensité maximale. Si l'axe longitudinal de la ligne laser est nommé x, on peut définir une distribution de largeurs selon cet axe, nommée w(x).

Selon une caractéristique, la largeur moyenne de la ou chaque ligne laser est comprise entre 10 µm et 1000 µm, de préférence entre 30 µm et 200 µm. Dans l'ensemble de cette description, on entend par "moyenne" la moyenne arithmétique. Sur toute la longueur de la ligne laser, la distribution de largeurs est étroite afin d'assurer un traitement homogène le long de la ligne laser lors de la mise en place du motif dans le revêtement. Ainsi, la différence entre la largeur la plus grande et la largeur la plus petite vaut de préférence au plus 10%, encore de préférence au plus 5% et même 3%, de la valeur de la largeur moyenne.

La longueur de la ou chaque ligne laser est de préférence d'au moins 10 cm, de préférence comprise dans un domaine allant de 20 cm ou 30 cm à 3 m. L'utilisation d'une ligne laser unique est préférée pour irradier toute ou partie de la largeur du substrat. Il est toutefois également possible d'utiliser plusieurs lignes laser disposées avec leurs directions longitudinales parallèles les unes aux autres, éventuellement disjointes.

Selon une caractéristique, la ligne laser est telle que le rapport de la longueur de la ligne laser sur la largeur moyenne de la ligne laser est supérieur ou égal à 10, de préférence supérieur ou égal à 30. Selon une caractéristique préférée, le rapport de la longueur de la ligne laser sur la largeur moyenne de la ligne laser est compris entre 30 et 300000.

Selon une caractéristique avantageuse, la direction longitudinale de la ligne laser est sensiblement perpendiculaire à la direction de déplacement relatif entre le substrat et la ligne laser. D'autres orientations de la ligne laser par rapport à la direction de déplacement relatif sont toutefois également possibles et, de manière générale, la direction longitudinale de la ligne laser forme un angle quelconque non nul avec la direction de déplacement relatif.

Dans un mode de réalisation, la ligne laser est fixe et le substrat est déplacé en translation selon une direction transversale à la direction longitudinale de la ligne laser. De manière avantageuse, le substrat est déplacé dans un plan sensiblement horizontal en regard de la ligne laser.

D'autres modes de réalisation sont également possibles. Par exemple, le substrat peut être fixe, alors que la ligne laser est déplacée en regard du substrat, notamment à l'aide d'un portique mobile. En variante, à la fois le substrat et la ligne laser peuvent être déplacés. Le déplacement relatif entre le substrat et la ligne laser peut également être un mouvement autre qu'un mouvement de translation, par exemple un mouvement de rotation, ou une combinaison d'un mouvement de translation et d'un mouvement de rotation. Le substrat peut également être déplacé dans un plan qui n'est pas horizontal, par exemple un plan vertical, ou selon toute autre orientation.

Lorsque le substrat est déplacé, notamment en translation, il peut être mis en mouvement à l'aide de tous moyens mécaniques de convoyage, par exemple à l'aide de bandes, de rouleaux, de plateaux en translation, de coussins d'air. Le système de convoyage permet de contrôler et réguler la vitesse du déplacement. Le moyen de convoyage comprend de préférence un châssis rigide et une pluralité de rouleaux. Dans le cas d'un substrat en matériau organique polymérique souple, le déplacement du substrat peut être réalisé à l'aide d'un système d'avance de films sous forme d'une succession de rouleaux. Dans ce cas, la planéité peut être assurée par un choix adéquat de la distance entre les rouleaux, en tenant compte de l'épaisseur du substrat, et donc de sa flexibilité, et de l'impact que peut avoir le traitement thermique sur la création d'une éventuelle flèche.

Le laser peut également être mis en mouvement de manière à ajuster sa distance au substrat, ce qui peut être utile en particulier lorsque le substrat est bombé, mais pas seulement. En effet, il est préférable que, pour la ou chaque ligne laser, la valeur absolue de la distance entre le plan focal de la ligne laser et le revêtement à traiter soit inférieure ou égale à 1 mm, notamment 0,5 mm, voire 0,3 mm et même 0,1 mm. Si le système de déplacement du substrat ou du laser n'est pas suffisamment précis quant à la distance entre le plan focal et le substrat, il convient de préférence de pouvoir ajuster la distance entre le laser et le substrat. Cet ajustement peut être automatique, notamment régulé grâce à une mesure de la distance en amont du traitement thermique.

Le procédé selon l'invention peut être mis en oeuvre sur un substrat muni de revêtements sur plusieurs de ses faces, en particulier muni d'un revêtement sur chacune de ses deux faces principales. Dans ce cas, au moins un revêtement d'une des faces ou de chaque face est traité selon l'invention. Lorsque des revêtements déposés sur les deux faces principales du substrat sont traités selon le procédé de l'invention, il est possible de traiter les revêtements de chaque face soit simultanément, soit successivement, par des techniques identiques ou distinctes, en particulier selon que la modification souhaitée des couches des revêtements traités est identique ou distincte.

Dans un mode de réalisation, l'étape de traitement thermique est appliquée simultanément à deux revêtements déposés sur deux faces opposées du substrat. Ce mode de réalisation peut être mis en oeuvre avec deux lignes laser distinctes, focalisées chacune sur l'un des deux revêtements. En variante, ce mode de réalisation peut être mis en oeuvre avec une ligne laser unique qui traite simultanément les deux revêtements, le substrat étant dans ce cas de préférence peu ou pas absorbant à la longueur d'onde du rayonnement laser.

Toutes les positions relatives du substrat et des sources laser formant la ligne laser sont possibles, du moment qu'elles permettent une irradiation satisfaisante du revêtement. Lorsque le substrat est disposé horizontalement, la ou chaque source laser est généralement disposée de manière à irradier la face supérieure et/ou la face inférieure du substrat. Lorsque deux faces principales du substrat sont à traiter, il est possible d'utiliser plusieurs sources laser situées de part et d'autre du substrat, que ce dernier soit en position horizontale, verticale, ou selon toute inclinaison. Ces sources laser peuvent être identiques ou différentes, en particulier leurs longueurs d'onde peuvent être différentes.

La vitesse de déplacement relatif entre le substrat et chaque ligne laser est avantageusement d'au moins 1 m/min, notamment 3 m/min ou 4 m/min ou 5 m/min et même 6 m/min ou 7 m/min, ou encore 8 m/min et même 9 m/min ou 10 m/min. Afin de limiter les incertitudes de positionnement du substrat relativement à la ligne laser lors de la mise en place du motif, la vitesse de déplacement relatif entre le substrat et chaque ligne laser varie lors du traitement d'au plus 10% en relatif, notamment 2% et même 1% par rapport à sa valeur nominale.

Selon une caractéristique avantageuse, la modulation temporelle de la puissance de la ligne laser est obtenue en modulant temporellement le signal électrique d'entrée de la ou des sources laser formant la ligne laser. Au sens de l'invention, on entend par "signal électrique d'entrée d'une source laser", soit le courant électrique d'alimentation de la source laser, soit la puissance électrique d'alimentation de la source laser.

Le temps de réponse pour obtenir la modulation temporelle de la puissance de la ligne laser à partir d'une modulation temporelle du signal électrique d'entrée de la ou des sources laser formant la ligne laser est plus ou moins long, et dépend du temps d'allumage et d'extinction de la ou chaque source laser. Dès lors, la résolution atteignable avec le procédé selon l'invention, c'est-à-dire la plus petite dimension de motif susceptible d'être obtenue selon la direction de déplacement relatif, est déterminée par le temps d'allumage et d'extinction de la ou chaque source laser, par la vitesse de déplacement relatif entre le substrat et la ligne laser, et par la largeur de la ligne laser. Le temps d'allumage et d'extinction d'une source laser est défini comme le temps nécessaire pour passer de 10% à 90% (ou inversement) de la valeur nominale de la puissance émise par la source, de l'enveloppe de la puissance dans le cas d'une source laser pulsée. Ainsi, pour des sources laser dont le temps d'allumage et d'extinction est de l'ordre de 100 µs, il est possible d'obtenir des motifs dont la dimension dans la direction de déplacement relatif est de l'ordre de 50 µm. Pour des sources laser dont le temps d'allumage et d'extinction est de l'ordre de 2 ms, il est possible d'obtenir des motifs dont la dimension dans la direction de déplacement relatif est de l'ordre de 1 mm. Pour des sources laser dont le temps d'allumage et d'extinction est de l'ordre de 20 ms, il est possible d'obtenir des motifs dont la dimension dans la direction de déplacement relatif est de l'ordre de 1 cm. Il est possible de limiter l'influence des temps d'extinction et d'allumage des sources laser en modulant la puissance émise par les sources sans les éteindre complètement.

Dans un mode de réalisation de l'invention, on obtient un motif à modulation d'au moins une propriété du revêtement qui présente une périodicité spatiale, en imposant une modulation temporelle du signal électrique d'entrée de la source laser dont la fréquence est égale au rapport de la vitesse de déplacement relatif entre le substrat et la ligne laser sur la période du motif.

Dans un autre mode de réalisation de l'invention, on obtient un motif à modulation d'au moins une propriété du revêtement sans périodicité spatiale, en faisant varier la modulation temporelle du signal électrique d'entrée de la source laser au cours du déplacement relatif du substrat et de la ligne laser.

De manière avantageuse, lorsque la ligne laser est formée à l'aide de plusieurs sources laser indépendantes, la modulation temporelle du signal électrique d'entrée peut être différente d'une source laser à une autre formant la ligne laser. Il est ainsi possible d'ajuster localement la puissance le long de la ligne laser, ce qui permet une modulation d'au moins une propriété du revêtement également selon la direction longitudinale de la ligne laser. Cela permet de gagner encore en flexibilité dans la modulation spatiale des propriétés du revêtement.

Selon une caractéristique préférentielle déjà évoquée, la puissance surfacique de la ligne laser dans le plan focal est supérieure ou égale à 10³ W/cm². Cette puissance peut être générée à l'aide d'une source laser de haute puissance linéique, notamment supérieure à 10 W/mm, opérant en mode continu (Continuous Wave, ou CW) ou quasi-continu (Quasi Continuous Wave, ou QCW), ou à l'aide d'une source laser pulsée de plus faible puissance moyenne, notamment inférieure à 100 mW/mm. Dans le cas d'une source laser pulsée, le processus de traitement du substrat est plus efficace car la diffusion thermique n'a pas le temps d'avoir lieu. La puissance de la ligne laser dans le plan focal doit être ajustée en tenant compte de cet effet de diffusion thermique.

Dans un mode de réalisation, la ou chaque source laser formant la ligne laser est une source continue ou quasi-continue.

Dans un autre mode de réalisation, la ou chaque source laser formant la ligne laser est une source pulsée. Dans ce cas, on module temporellement la puissance des impulsions émises. Lorsque le rayonnement est pulsé, la fréquence de répétition est avantageusement d'au moins 10 kHz, notamment 15 kHz et même 20 kHz, de manière à être compatible avec la modulation et les vitesses de déplacement utilisées.

Dans un mode de réalisation, la ligne laser est fixe et le substrat a au moins une première dimension et une deuxième dimension transversales entre elles, le procédé comprenant au moins une première étape et une deuxième étape telles que :
- dans la première étape, on déplace le substrat en translation parallèlement à sa première dimension et transversalement à la direction longitudinale de la ligne laser, et on module temporellement la puissance de la ligne laser ;
- dans la deuxième étape, on déplace le substrat en translation parallèlement à sa deuxième dimension et transversalement à la direction longitudinale de la ligne laser, et on module temporellement la puissance de la ligne laser.

Dans ce mode de réalisation, le revêtement du substrat subit au moins deux étapes successives de traitement thermique, une première étape selon une direction et une deuxième étape selon une direction transversale à la direction de la première étape de traitement thermique. Le procédé selon l'invention permet ainsi de structurer la ou les propriétés du revêtement selon un maillage, avec au moins deux directions de création du maillage.

De manière avantageuse, le procédé selon l'invention comprend, préalablement à l'étape de traitement thermique du revêtement, une étape de dépôt de la ou chaque couche du revêtement sur le substrat. De préférence, l'étape de dépôt de la ou chaque couche mince du revêtement est réalisée par pulvérisation cathodique assistée par champ magnétique (procédé magnétron), ou par dépôt chimique en phase vapeur (CVD), notamment assistée par plasma (PECVD), sous vide ou sous pression atmosphérique, ou par un procédé d'évaporation sous vide.

Un autre objet de l'invention est une installation de traitement thermique d'un substrat muni d'au moins un revêtement, en vue de créer dans le revêtement un motif à modulation spatiale d'au moins une propriété du revêtement, cette installation comprenant :
- une ou plusieurs sources laser ainsi que des optiques de mise en forme et de redirection propres à générer au moins une ligne laser,
- des moyens de déplacement aptes à imposer en fonctionnement un déplacement relatif du substrat et de la ligne laser selon une direction transversale à la direction longitudinale de la ligne laser, alors que la ligne laser est focalisée sur le revêtement,
- des moyens de modulation temporelle de la puissance de la ligne laser en fonction de la vitesse de déplacement relatif et des dimensions du motif selon la direction de déplacement relatif.

L'installation de traitement thermique selon l'invention peut être intégrée dans une ligne de dépôt de couches, par exemple une ligne de dépôt par pulvérisation cathodique assistée par champ magnétique (procédé magnétron), ou une ligne de dépôt chimique en phase vapeur (CVD), notamment assistée par plasma (PECVD), sous vide ou sous pression atmosphérique. La ligne comprend en général des dispositifs de manutention des substrats, une installation de dépôt, des dispositifs de contrôle optique, des dispositifs d'empilage. Les substrats défilent, par exemple sur des rouleaux convoyeurs, successivement devant chaque dispositif ou chaque installation.

L'installation de traitement thermique selon l'invention est de préférence située juste après l'installation de dépôt du revêtement, par exemple à la sortie de l'installation de dépôt. Le substrat revêtu peut ainsi être traité en ligne après le dépôt du revêtement, à la sortie de l'installation de dépôt et avant les dispositifs de contrôle optique, ou après les dispositifs de contrôle optique et avant les dispositifs d'empilage des substrats.

L'installation de traitement thermique peut aussi être intégrée à l'installation de dépôt. Par exemple, le laser peut être introduit dans une des chambres d'une installation de dépôt par pulvérisation cathodique, notamment dans une chambre où l'atmosphère est raréfiée, notamment sous une pression comprise entre 10⁻⁶ mbar et 10⁻² mbar. Le dispositif de traitement thermique peut aussi être disposé en dehors de l'installation de dépôt, mais de manière à traiter un substrat situé à l'intérieur de ladite installation. Il suffit de prévoir à cet effet un hublot transparent à la longueur d'onde du rayonnement utilisé, au travers duquel le rayonnement laser vient traiter le revêtement. Il est ainsi possible de traiter un revêtement (par exemple une couche d'argent) avant le dépôt subséquent d'une autre couche dans la même installation.

Que l'installation de traitement thermique soit en dehors de ou intégrée à l'installation de dépôt, ces procédés « en ligne » sont préférables à un procédé en reprise dans lequel il serait nécessaire d'empiler les substrats de verre entre l'étape de dépôt et l'étape de traitement thermique.

Les procédés en reprise peuvent toutefois avoir un intérêt dans les cas où la mise en oeuvre du traitement thermique selon l'invention est faite dans un lieu différent de celui où est réalisé le dépôt, par exemple dans un lieu où est réalisée la transformation du verre. L'installation de traitement thermique peut alors être intégrée à d'autres lignes que la ligne de dépôt de couches. Elle peut par exemple être intégrée à une ligne de fabrication de vitrages multiples, notamment de doubles ou triples vitrages, à une ligne de fabrication de vitrages feuilletés, ou encore à une ligne de fabrication de vitrages bombés et/ou trempés. Les vitrages feuilletés ou bombés ou trempés peuvent être utilisés aussi bien en tant que vitrages bâtiment ou automobile. Dans ces différents cas, le traitement thermique selon l'invention est de préférence réalisé avant la réalisation du vitrage multiple ou feuilleté. Le traitement thermique peut toutefois aussi être mis en oeuvre après réalisation du vitrage multiple ou du vitrage feuilleté.

L'invention a également pour objet un substrat, notamment en verre non trempé ou en matériau organique polymérique, susceptible d'être obtenu par le procédé décrit précédemment, qui est muni, sur au moins une partie d'au moins une de ses faces, d'un revêtement continu comportant un motif à modulation spatiale d'au moins une propriété du revêtement.

Selon une caractéristique, le substrat, ou la partie du substrat qui porte effectivement le revêtement continu comportant le motif à modulation spatiale d'au moins une propriété du revêtement, présente au moins une dimension supérieure ou égale à 0,5 m, notamment 1 m, voire 2 m et même 3 m. De préférence, l'aire du revêtement continu comportant le motif à modulation spatiale d'au moins une propriété du revêtement est supérieure ou égale à 1 m², encore de préférence supérieure ou égale à 1,4 m². Dans un mode de réalisation avantageux, le substrat traité est parallélépipédique de longueur 1,3 m et de largeur 1,1 m. Un avantage de l'invention est l'obtention rapide d'un motif à modulation d'au moins une propriété du revêtement, même pour des grandes tailles de substrats, avec un haut niveau de résolution.

Selon un aspect de l'invention, le motif du revêtement du substrat est formé d'une série de lignes ou de portions de lignes juxtaposées, où la valeur de la propriété du revêtement change d'une ligne à une autre et une dimension caractéristique pour le changement de valeur de la propriété du revêtement, prise transversalement à la direction longitudinale des lignes, est un multiple d'une dimension nominale comprise entre 10 µm et 1000 µm, de préférence entre 10 µm et 200 µm.

Dans un mode de réalisation, le motif du revêtement du substrat est un motif avec une variation continue de la propriété du revêtement.

En particulier, selon une caractéristique, le motif du revêtement du substrat est formé d'une série de lignes ou de portions de lignes juxtaposées, et la valeur de la propriété du revêtement change continûment d'une ligne à une autre. Le motif à modulation spatiale d'au moins une propriété du revêtement est ainsi un motif avec une variation continue de la propriété du revêtement perpendiculairement à la direction longitudinale des lignes ou portions de lignes juxtaposées du motif. Une telle variation continue de la propriété du revêtement peut être obtenue, par exemple, en modulant temporellement la puissance de la ligne laser selon une fonction de type signal sinusoïdal ou signal triangulaire.

Dans un mode de réalisation, le substrat est muni d'au moins une couche mince continue comprenant des zones linéaires juxtaposées ayant des valeurs de résistances carrées différentes. Dans un autre mode de réalisation, le substrat est muni d'au moins une couche mince continue comprenant des zones linéaires juxtaposées ayant des valeurs de leurs propriétés optiques et/ou énergétiques différentes. Dans le cadre de l'invention, on désigne sous le terme générique "propriétés optiques et/ou énergétiques" le groupe de propriétés comprenant la transmission de rayonnement, la réflexion de rayonnement, l'absorption de rayonnement, le flou en transmission et/ou en réflexion, les coordonnées colorimétriques en réflexion et/ou en transmission.

Enfin, l'invention a pour objet l'utilisation d'un substrat tel que décrit ci-dessus dans des vitrages simples, multiples ou feuilletés, des miroirs, des éléments de mobilier intérieur, des revêtements muraux, notamment dans le domaine de l'automobile ou du bâtiment. Le motif du revêtement peut être utilisé à des fins décoratives. En variante, le motif du revêtement peut être utilisé à des fins fonctionnelles, comme c'est le cas par exemple pour des vitrages chauffants, où le motif peut permettre d'améliorer l'homogénéité de l'intensité de chauffe du vitrage, pour des vitrages opacifiants, où le motif peut permettre de contrôler la quantité de lumière visible traversant le vitrage, ou encore pour des vitrages de contrôle solaire, où le motif peut permettre d'ajuster le gain de chaleur solaire. Si le revêtement est un empilement bas émissif, et dans le cas d'un vitrage multiple comportant au moins deux substrats séparés par une lame de gaz, il est préférable que l'empilement soit disposé sur la face en contact avec la lame de gaz, notamment en face 2 par rapport à l'extérieur, c'est-à-dire sur la face du substrat en contact avec l'extérieur du bâtiment qui est en opposée à la face tournée vers l'extérieur, ou en face 3, c'est-à-dire sur la face du deuxième substrat en partant de l'extérieur du bâtiment tournée vers l'extérieur. Si le revêtement est une couche photocatalytique, il est de préférence disposé en face 1, donc en contact avec l'extérieur du bâtiment.

Une application avantageuse de l'invention, à la fois à des fins esthétiques et fonctionnelles, est la mise en place de motifs périodiques à modulation de transmission lumineuse, ou d'une autre propriété, dans deux revêtements positionnés sur deux faces d'un vitrage, en imposant un décalage (ou déphasage) entre les motifs des deux revêtements. A titre d'exemple, en mettant en place une alternance périodique de bandes sombres et de bandes transparentes sur un premier substrat et la même ou une autre alternance périodique de bandes sombres et de bandes transparentes sur un deuxième substrat, il est possible en mettant les deux substrats en regard d'obtenir un vitrage dont les propriétés de transmission lumineuse sont ajustables en fonction du positionnement relatif des bandes des deux substrats.

Une autre application avantageuse de l'invention est la fabrication de substrats transparents, en verre ou en matériau organique polymérique, dont la bordure extérieure présente une transmission lumineuse nulle. De tels substrats transparents à bordure opaque sont notamment recherchés lorsqu'il est nécessaire de cacher des pièces techniques positionnées à la bordure du substrat, comme c'est le cas par exemple pour les dispositifs électrochromes où l'on souhaite dissimuler les "bus bars" présents sur les bords du dispositif. Pour cette application, le procédé selon l'invention constitue une bonne alternative à la sérigraphie, en particulier pour des substrats qui ne résistent pas aux hautes températures.

L'invention a également pour objet l'utilisation d'un substrat tel que décrit ci-dessus dans des dispositifs électroniques à couches, notamment en tant que substrat porteur d'électrode configurée selon un dessin prédéfini, par exemple en forme de bandes ou de grille, qui peut avantageusement être une électrode transparente. Un substrat tel que décrit ci-dessus peut être utilisé, en particulier, pour des dispositifs à diode électroluminescente organique (OLED), des dispositifs photovoltaïques, des dispositifs électrochromes.

Les caractéristiques et avantages de l'invention apparaîtront dans la description qui va suivre de plusieurs exemples de réalisation d'un procédé et d'un substrat selon l'invention, donnée uniquement à titre d'exemple et faite en se référant aux dessins annexés dans lesquels :

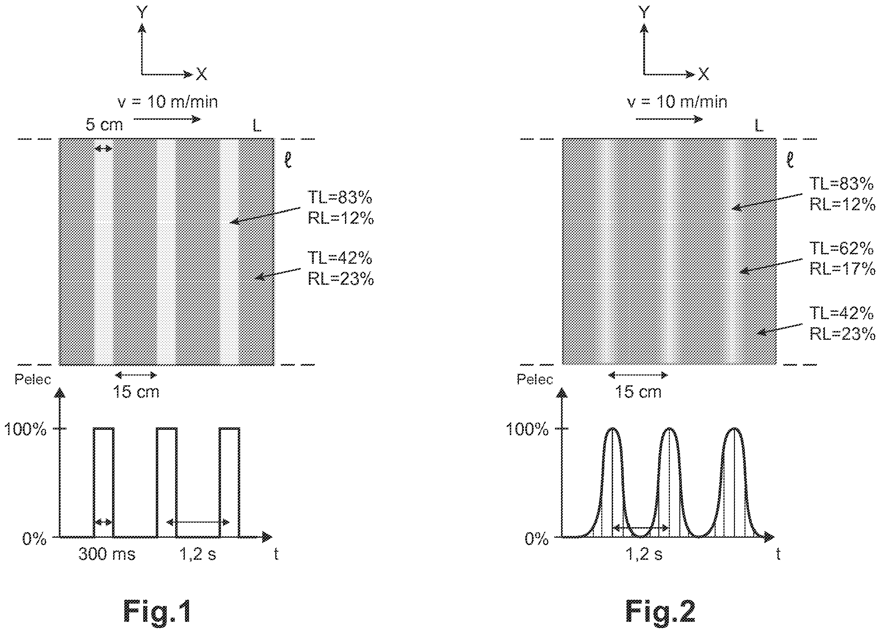

- la figure 1 est une vue de dessus d'un substrat muni sur l'une de ses faces d'un revêtement comportant un motif à modulation spatiale d'au moins une propriété du revêtement, obtenu selon le procédé de l'invention, la partie inférieure de la figure 1 montrant la puissance électrique de type créneau appliquée en entrée des sources laser (Exemples 1 et 2) ;
- la figure 2 est une vue de dessus d'un substrat muni sur l'une de ses faces d'un revêtement comportant un motif à modulation spatiale d'au moins une propriété du revêtement, obtenu selon le procédé de l'invention, la partie inférieure de la figure 2 montrant la puissance électrique de type sinusoïdale appliquée en entrée des sources laser (Exemple 3) ;

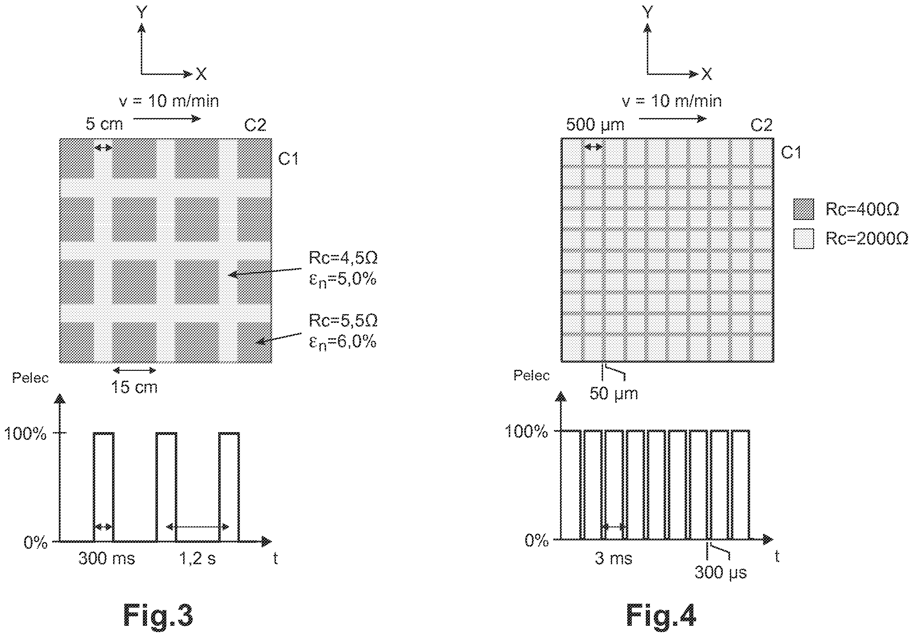

- les figures 3 et 4 sont des vues de dessus d'un substrat muni sur l'une de ses faces d'un revêtement comportant un motif à modulation spatiale d'au moins une propriété du revêtement, obtenu selon le procédé de l'invention comprenant deux étapes successives de traitement thermique selon deux directions perpendiculaires entre elles, de manière à créer un maillage, la partie inférieure des figures 3 et 4 montrant la puissance électrique de type créneau appliquée en entrée des sources laser pour chaque étape de traitement thermique (Exemples 4 et 5).

Dans les exemples, les grandeurs utilisées sont les suivantes :
- la transmission lumineuse, au sens de la norme NF EN 410, notée TL et exprimée en %,
- la réflexion lumineuse, au sens de la norme NF EN 410, notée RL et exprimée en %,
- la résistance carrée, notée R_{c} et exprimée en ohms,
- l'émissivité normale à la température de 283 K, calculée selon la norme EN 12898 à partir d'un spectre en réflexion dans la gamme spectrale allant de 5 à 50 micromètres, notée εₙ et exprimée en %.

### EXEMPLE 1

Sur une face principale d'un substrat en verre silico-sodo-calcique, obtenu par le procédé float puis découpé selon une forme rectangulaire de longueur L = 6 m et de largeur ℓ = 3,3 m, on dépose une couche de titane métallique de 6 nm d'épaisseur par le procédé magnétron à l'aide d'une cible en titane, sous un plasma d'argon.

On traite le substrat ainsi revêtu sous air à l'aide d'une ligne laser formée par des sources laser de type diodes laser InGaAs, qui sont des sources quasi-continues émettant à une longueur d'onde comprise entre 900 nm et 1000 nm. La ligne laser a une longueur de 3,3 m, égale à la largeur ℓ du substrat, et une largeur moyenne de 50 µm. La largeur de la ligne laser est homogène sur la longueur de la ligne, de sorte que la différence entre la largeur la plus grande et la largeur la plus petite vaut 3% de la valeur moyenne, soit 1,5 µm.

Le substrat est disposé sur un convoyeur à rouleaux de manière à défiler selon une direction X, parallèlement à sa longueur. La ligne laser est fixe et positionnée au-dessus de la face revêtue du substrat avec sa direction longitudinale Y qui s'étend perpendiculairement à la direction X de défilement du substrat, c'est-à-dire selon la largeur du substrat, en s'étendant sur toute cette largeur.

La position du plan focal de la ligne laser est ajustée pour être dans l'épaisseur de la couche de titane lorsque le substrat est positionné sur le convoyeur, la puissance surfacique moyenne de la ligne laser au niveau du plan focal étant de 10⁵ W/cm².

On fait défiler le substrat sous la ligne laser à une vitesse de 10 m/min, la vitesse ne variant pas de plus de 1% en relatif. Au cours du défilement du substrat sous la ligne laser, on applique en entrée des diodes laser une puissance électrique P_{elec} en créneau, comme visible dans le bas de la figure 1, qui montre l'évolution de P_{elec} en fonction du temps t. La période du signal en créneau P_{elec}(t) est de 1,2 s et la durée de pulsation est de 300 ms.

Comme montré sur la figure 1, on obtient un substrat dont le revêtement comprend des bandes traitées d'oxyde de titane de largeur égale à 5 cm parallèlement à la longueur du substrat, résultant de l'oxydation de la couche de titane métallique au contact de l'air lorsque 100% de la puissance de la ligne laser est appliquée à la couche, ce qui correspond aux pics du signal en créneau P_{elec}(t), ces bandes d'oxyde de titane étant alternées avec des bandes non traitées de titane métallique de largeur égale à 15 cm parallèlement à la longueur du substrat. Les bandes traitées d'oxyde de titane ont une transmission lumineuse TL de 83% et une réflexion lumineuse RL de 12%, alors que les bandes non traitées de titane métallique ont une transmission lumineuse TL de 42% et une réflexion lumineuse RL de 23%. Le substrat revêtu présente ainsi un aspect visuel rayé.

### EXEMPLE 2

Comme dans l'exemple 1, on applique le traitement thermique selon l'invention à un substrat en verre silico-sodo-calcique, obtenu par le procédé float et découpé selon une forme rectangulaire de longueur L = 6 m et de largeur ℓ = 3,3 m, qui a été revêtu sur l'une de ses faces principales d'une couche de titane métallique de 6 nm d'épaisseur, par le procédé magnétron à l'aide d'une cible en titane sous un plasma d'argon.

Dans l'exemple 2, la ligne laser utilisée pour la mise en oeuvre du traitement thermique est formée par des sources laser de type laser à disque Yb:YAG couplé dans une fibre optique de 300 µm de diamètre de coeur, émettant à une longueur d'onde de 1030 nm. La ligne laser a une longueur de 3,3 m, égale à la largeur ℓ du substrat, et une largeur moyenne de 50 µm. La largeur de la ligne laser est homogène sur la longueur de la ligne, de sorte que la différence entre la largeur la plus grande et la largeur la plus petite vaut 3% de la valeur moyenne, soit 1,5 µm.

Comme dans l'exemple 1, le substrat est disposé sur un convoyeur à rouleaux de manière à défiler selon une direction X, parallèlement à sa longueur. La ligne laser est fixe et positionnée au-dessus de la face revêtue du substrat avec sa direction longitudinale Y qui s'étend perpendiculairement à la direction X de défilement du substrat, c'est-à-dire selon la largeur du substrat, en s'étendant sur toute cette largeur.

La position du plan focal de la ligne laser est ajustée pour être dans l'épaisseur de la couche de titane lorsque le substrat est positionné sur le convoyeur, la puissance surfacique moyenne de la ligne laser au niveau du plan focal étant de 10⁵ W/cm².

On fait défiler le substrat sous la ligne laser à une vitesse de 10 m/min, la vitesse ne variant pas de plus de 1% en relatif. Au cours du défilement du substrat sous la ligne laser, on applique en entrée sur les sources laser une tension de commande de la puissance P_{elec} en créneau, comme visible dans le bas de la figure 1, qui montre l'évolution de P_{elec} en fonction du temps t. La période du signal en créneau P_{elec}(t) est de 1,2 s et la durée de pulsation est de 300 ms.

On obtient ainsi un substrat tel que montré sur la figure 1, dont le revêtement comprend des bandes traitées d'oxyde de titane de largeur égale à 5 cm parallèlement à la longueur du substrat, résultant de l'oxydation de la couche de titane métallique au contact de l'air lorsque 100% de la puissance de la ligne laser est appliquée à la couche, ce qui correspond aux pics du signal en créneau P_{elec}(t), ces bandes d'oxyde de titane étant alternées avec des bandes non traitées de titane métallique de largeur égale à 15 cm parallèlement à la longueur du substrat. Les bandes traitées d'oxyde de titane ont une transmission lumineuse TL de 83% et une réflexion lumineuse RL de 12%, alors que les bandes non traitées de titane métallique ont une transmission lumineuse TL de 42% et une réflexion lumineuse RL de 23%.

### EXEMPLE 3

Comme dans les exemples 1 et 2, on applique le traitement thermique selon l'invention à un substrat en verre silico-sodo-calcique, obtenu par le procédé float et découpé selon une forme rectangulaire de longueur L = 6 m et de largeur ℓ = 3,3 m, qui a été revêtu sur l'une de ses faces principales d'une couche de titane métallique de 6 nm d'épaisseur, par le procédé magnétron à l'aide d'une cible en titane sous un plasma d'argon.

Dans l'exemple 3, la ligne laser utilisée pour la mise en oeuvre du traitement thermique est formée par des sources laser pulsées, avec une durée d'impulsion de 400 fs et un taux de répétition de 500 kHz, émettant à une longueur d'onde de 1040 nm. La ligne laser a une longueur de 3,3 m, égale à la largeur ℓ du substrat, et une largeur moyenne de 50 µm. La largeur de la ligne laser est homogène sur la longueur de la ligne, de sorte que la différence entre la largeur la plus grande et la largeur la plus petite vaut 3% de la valeur moyenne, soit 1,5 µm.

Le substrat est disposé sur un convoyeur à rouleaux de manière à défiler selon une direction X, parallèlement à sa longueur. La ligne laser est fixe et positionnée au-dessus de la face revêtue du substrat avec sa direction longitudinale Y qui s'étend perpendiculairement à la direction X de défilement du substrat, c'est-à-dire selon la largeur du substrat, en s'étendant sur toute cette largeur.

La position du plan focal de la ligne laser est ajustée pour être dans l'épaisseur de la couche de titane lorsque le substrat est positionné sur le convoyeur, la puissance surfacique moyenne de la ligne laser au niveau du plan focal étant de 10³ W/cm².

On fait défiler le substrat sous la ligne laser à une vitesse de 10 m/min, la vitesse ne variant pas de plus de 1% en relatif. Au cours du défilement du substrat sous la ligne laser, on applique en entrée des sources laser une puissance électrique P_{elec} de type sinusoïdale, comme visible dans le bas de la figure 2, qui montre l'évolution de P_{elec} en fonction du temps t. La période du signal sinusoïdal P_{elec}(t) est de 1,2 s, ce qui permet de moduler temporellement la puissance des pulses des sources laser comme montré schématiquement sur la figure 2 où seuls quelques pulses ont été représentés dans l'enveloppe du signal sinusoïdal.

Comme montré sur la figure 2, on obtient un substrat dont le revêtement comporte un motif à modulation de sa transmission lumineuse TL et de sa réflexion lumineuse RL ayant une périodicité spatiale de 15 cm, avec un gradient de TL et RL alternativement croissant et décroissant dans la direction de longueur du substrat. Les zones de plus haute TL, qui présentent une TL égale à 83% et une RL égale à 12%, sont des bandes d'oxyde de titane résultant de l'oxydation de la couche de titane métallique au contact de l'air lorsque 100% de la puissance de la ligne laser est appliquée à la couche, ce qui correspond aux pics du signal sinusoïdal P_{elec}(t). Les zones de plus basse TL, qui présentent une TL égale à 42% et une RL égale à 23%, sont des bandes non traitées de titane métallique, ce qui correspond aux creux du signal sinusoïdal P_{elec}(t).

### EXEMPLE 4

Sur une face principale d'un substrat en verre silico-sodo-calcique, obtenu par le procédé float puis découpé selon une forme carrée de 3,3 m de côté, on dépose de manière connue par le procédé magnétron un empilement de couches minces comprenant une couche d'argent, ladite couche d'argent conférant des propriétés de basse émissivité au verre.

Cet empilement comprend dans l'ordre (depuis le substrat jusqu'à la surface extérieure) les couches d'oxydes, métalliques ou de nitrures suivantes, les épaisseurs géométriques étant indiquées entre parenthèses :
Verre / SnO₂ (20 nm) / ZnO (15 nm) /Ag (8,5 nm) / Ni-Cr / ZnO (15 nm) / Si₃N₄ (25 nm).

Dans l'exemple 4, le procédé comprend deux étapes successives de traitement thermique, la première étape étant identique au traitement appliqué au substrat revêtu dans l'exemple 1, avec le substrat qui défile parallèlement à l'un de ses côtés C1, et la deuxième étape étant également identique au traitement appliqué au substrat revêtu dans l'exemple 1, mais le substrat défilant cette fois-ci parallèlement à un autre de ses côtés C2 perpendiculaire au côté C1. Cette deuxième étape est illustrée sur la figure 3.

Comme montré sur la figure 3, on obtient un substrat dont le revêtement comporte un motif à modulation de ses propriétés sous la forme d'un maillage, les brins du maillage étant des bandes traitées de largeur égale à 5 cm, qui délimitent entre elles des zones non traitées ayant une forme carrée de 15 cm de côté. Les bandes traitées ont une résistance carrée R_{c} de 4,5 Ω et une émissivité normale εₙ de 5,0%, alors que les zones non traitées ont une résistance carrée R_{c} de 5,5 Ω et une émissivité normale εₙ de 6,0%. Le vitrage obtenu présente ainsi un motif ajouré de réflexion des rayonnements infrarouges permettant de contrôler le gain de chaleur solaire.

### EXEMPLE 5

Sur une face principale d'un substrat en verre silico-sodo-calcique, obtenu par le procédé float puis découpé selon une forme carrée de 3,3 m de côté, on dépose de manière connue une couche de titane métallique de 6 nm d'épaisseur par le procédé magnétron à l'aide d'une cible en titane, sous un plasma d'argon.

Comme dans l'exemple 4, le procédé comprend deux étapes successives de traitement thermique. La première étape est sensiblement identique au traitement appliqué au substrat revêtu dans l'exemple 1, avec le substrat qui défile parallèlement à l'un de ses côtés C1, sauf qu'on applique en entrée des diodes laser la puissance électrique P_{elec}(t) en créneau visible dans le bas de la figure 4, où la période du signal est de 3 ms et la durée de pulsation est de 300 µs. La deuxième étape est identique à la première étape, mais avec le substrat qui défile cette fois-ci parallèlement à un autre de ses côtés C2 perpendiculaire au côté C1. Cette deuxième étape est illustrée sur la figure 4.

Comme montré sur la figure 4, on obtient un substrat dont le revêtement comporte un motif à modulation de sa conductivité électrique sous la forme d'un maillage, les brins du maillage étant des bandes non traitées de largeur égale à 50 µm, qui délimitent entre elles des zones traitées ayant une forme carrée de 500 µm de côté. Les zones traitées ont une résistance carrée R_{c} de 2000 Ω, alors que les bandes non traitées ont une résistance carrée R_{c} de 400 Ω. Le vitrage obtenu comporte ainsi une grille conductrice à sa surface.

## Revendications

1. Procédé d'obtention d'un substrat muni, sur au moins une partie d'au moins une de ses faces, d'un revêtement comportant un motif à modulation spatiale d'au moins une propriété du revêtement, **caractérisé en ce qu'**il comprend une étape de traitement thermique, au moyen d'un rayonnement laser, d'un revêtement continu déposé sur le substrat, où le revêtement avant traitement thermique absorbe au moins partiellement le rayonnement laser, cette étape de traitement thermique étant telle qu'on irradie le substrat avec le rayonnement laser focalisé sur le revêtement sous la forme d'au moins une ligne laser, en conservant le revêtement continu et sans fusion du revêtement, et on impose un déplacement relatif du substrat et de la ligne laser focalisée sur le revêtement selon une direction (X) transversale à la direction longitudinale (Y) de la ligne laser, tout en modulant temporellement au cours de ce déplacement relatif la puissance (Pₗₐₛ) de la ligne laser en fonction de la vitesse (v) de déplacement relatif et des dimensions du motif selon la direction (X) de déplacement relatif.

2. Procédé selon la revendication 1, **caractérisé en ce que** le revêtement avant traitement thermique est monocouche.

3. Procédé selon la revendication 1, **caractérisé en ce que** le revêtement avant traitement thermique est un empilement de couches dont au moins une couche absorbe au moins partiellement le rayonnement laser.

4. Procédé selon l'une quelconque des revendications précédentes, **caractérisé en ce que** le revêtement avant traitement thermique comporte au moins une couche à base d'au moins un métal, métalloïde, oxyde, nitrure, carbure, sulfure, ou d'un quelconque de leurs mélanges.

5. Procédé selon l'une quelconque des revendications précédentes, **caractérisé en ce que** la direction longitudinale (Y) de la ligne laser est sensiblement perpendiculaire à la direction (X) de déplacement relatif.

6. Procédé selon l'une quelconque des revendications précédentes, **caractérisé en ce que** la ligne laser est fixe et on déplace le substrat en translation selon une direction (X) transversale à la direction longitudinale (Y) de la ligne laser.

7. Procédé selon l'une quelconque des revendications précédentes, **caractérisé en ce qu'**on module temporellement la puissance (Pₗₐₛ) de la ligne laser en modulant temporellement le signal électrique d'entrée de la ou chaque source laser formant la ligne laser.

8. Procédé selon la revendication 7, **caractérisé en ce que** le motif présente une périodicité spatiale et la fréquence de modulation temporelle du signal électrique d'entrée de la source laser est égale au rapport de la vitesse de déplacement relatif entre le substrat et la ligne laser sur la période du motif.

9. Procédé selon l'une quelconque des revendications 7 ou 8, **caractérisé en ce que** la modulation temporelle du signal électrique d'entrée de la source laser varie au cours du déplacement relatif du substrat et de la ligne laser.

10. Procédé selon l'une quelconque des revendications 7 à 9, **caractérisé en ce que** la ligne laser est formée à l'aide de plusieurs sources laser indépendantes, la modulation temporelle du signal électrique d'entrée étant différente d'une source laser à une autre formant la ligne laser.

11. Procédé selon l'une quelconque des revendications précédentes, **caractérisé en ce que** la ligne laser a une largeur moyenne comprise entre 10 µm et 1000 µm, de préférence entre 30 µm et 200 µm.

12. Procédé selon l'une quelconque des revendications précédentes, **caractérisé en ce que** la puissance surfacique moyenne de la ligne laser dans le plan focal est supérieure ou égale à 10³ W/cm².

13. Procédé selon l'une quelconque des revendications précédentes, **caractérisé en ce que** la ou chaque source laser formant la ligne laser est une source continue ou quasi-continue.

14. Procédé selon l'une quelconque des revendications 1 à 12, **caractérisé en ce que** la ou chaque source laser formant la ligne laser est une source pulsée et on module temporellement la puissance des impulsions émises.

15. Procédé selon l'une quelconque des revendications précédentes, **caractérisé en ce que** la ligne laser est fixe et le substrat a au moins une première dimension (L ; C1) et une deuxième dimension (ℓ ; C2) transversales entre elles, le procédé comprenant au moins une première étape et une deuxième étape telles que :
- dans la première étape, on déplace le substrat en translation parallèlement à sa première dimension (L ; C1) et transversalement à la direction longitudinale (Y) de la ligne laser, et on module temporellement la puissance (Pₗₐₛ) de la ligne laser ;
- dans la deuxième étape, on déplace le substrat en translation parallèlement à sa deuxième dimension (ℓ ; C2) et transversalement à la direction longitudinale (Y) de la ligne laser, et on module temporellement la puissance (Pₗₐₛ) de la ligne laser.

16. Procédé selon l'une quelconque des revendications précédentes, **caractérisé en ce que** la vitesse (v) de déplacement relatif est d'au moins 3 mètres par minute.

17. Procédé selon l'une quelconque des revendications précédentes, **caractérisé en ce que**, au cours du traitement thermique, la température de la face du substrat opposée au revêtement traité est inférieure ou égale à 100°C, notamment 50°C et même 30°C.

18. Procédé selon l'une quelconque des revendications précédentes, **caractérisé en ce que** le revêtement une fois traité comporte un motif à modulation spatiale d'au moins une propriété parmi la conductivité électrique, l'émissivité, la transmission de rayonnement, la réflexion de rayonnement, l'absorption de rayonnement, le flou, les coordonnées colorimétriques, l'hydrophilie, l'activité photocatalytique du revêtement.

19. Procédé selon l'une quelconque des revendications précédentes, **caractérisé en ce qu'**il comprend, préalablement à l'étape de traitement thermique, une étape de dépôt de la ou chaque couche du revêtement sur le substrat.

20. Installation de traitement d'un substrat muni d'au moins un revêtement, en vue de créer dans le revêtement un motif à modulation spatiale d'au moins une propriété du revêtement, **caractérisée en ce qu'**elle comprend :
- une ou plusieurs sources laser ainsi que des optiques de mise en forme et de redirection propres à générer au moins une ligne laser,
- des moyens de déplacement aptes à imposer en fonctionnement un déplacement relatif du substrat et de la ligne laser selon une direction (X) transversale à la direction longitudinale (Y) de la ligne laser, alors que la ligne laser est focalisée sur le revêtement,
- des moyens de modulation temporelle de la puissance de la ligne laser en fonction de la vitesse (v) de déplacement relatif et des dimensions du motif selon la direction (X) de déplacement relatif.

21. Substrat, notamment en verre non trempé ou en matériau organique polymérique, susceptible d'être obtenu par le procédé selon l'une des revendications 1 à 19, ce substrat étant muni, sur au moins une partie d'au moins une de ses faces, d'un revêtement continu comportant un motif à modulation spatiale d'au moins une propriété du revêtement.

22. Substrat selon la revendication 21, **caractérisé en ce que** l'aire du revêtement continu comportant le motif à modulation spatiale d'au moins une propriété du revêtement est supérieure ou égale à 1 m², de préférence supérieure ou égale à 1,4 m².

23. Substrat selon l'une quelconque des revendications 21 ou 22, **caractérisé en ce que** le motif du revêtement est formé d'une série de lignes ou de portions de lignes juxtaposées, où la valeur de la propriété du revêtement change d'une ligne à une autre et une dimension caractéristique pour le changement de valeur de la propriété du revêtement, prise transversalement à la direction longitudinale des lignes, est un multiple d'une dimension nominale comprise entre 10 µm et 1000 µm.

24. Substrat selon l'une quelconque des revendications 21 à 23, **caractérisé en ce que** le motif du revêtement est un motif avec une variation continue de la propriété du revêtement.

25. Substrat selon l'une quelconque des revendications 21 à 24, muni d'au moins une couche mince continue comprenant des zones linéaires juxtaposées ayant des valeurs de résistances carrées différentes.

26. Substrat selon l'une quelconque des revendications 21 à 24, muni d'au moins une couche mince continue comprenant des zones linéaires juxtaposées ayant des valeurs de leurs propriétés optiques ou énergétiques différentes.

27. Utilisation d'un substrat selon l'une quelconque des revendications 21 à 26 dans des vitrages simples, multiples ou feuilletés, des miroirs, des éléments de mobilier intérieur, des revêtements muraux, des dispositifs électroniques à couches.

## Patentansprüche

1. Verfahren zur Herstellung eines Substrats, das auf mindestens einem Teil mindestens einer seiner Seiten mit einer Beschichtung versehen ist, die ein Muster mit räumlicher Modulation mindestens einer Eigenschaft der Beschichtung vorweist, **dadurch gekennzeichnet, dass** es einen Schritt einer Wärmebehandlung einer auf dem Substrat abgeschiedenen kontinuierlichen Beschichtung mittels einer Laserstrahlung umfasst, wobei die Beschichtung vor der Wärmebehandlung mindestens teilweise die Laserstrahlung absorbiert, wobei sich dieser Schritt der Wärmebehandlung so darstellt, dass das Substrat mit der auf die Beschichtung fokussierten Laserstrahlung in Form mindestens einer Laserlinie bestrahlt wird, wobei die Beschichtung kontinuierlich und ohne Schmelzen der Beschichtung erhalten bleibt, und eine Relativbewegung des Substrats und der auf die Beschichtung fokussierten Laserlinie in einer Richtung (X) quer zur Längsrichtung (Y) der Laserlinie erzwungen wird, während im Verlauf dieser Relativbewegung die Leistung (Pₗₐₛ) der Laserlinie in Abhängigkeit von der Geschwindigkeit (v) der Relativbewegung und den Abmessungen des Musters in der Richtung (X) der Relativbewegung zeitlich moduliert wird.

2. Verfahren nach Anspruch 1, **dadurch gekennzeichnet, dass** die Beschichtung vor der Wärmebehandlung einschichtig ist.

3. Verfahren nach Anspruch 1, **dadurch gekennzeichnet, dass** die Beschichtung vor der Wärmebehandlung ein Stapel von Schichten ist, von denen mindestens eine Schicht die Laserstrahlung mindestens teilweise absorbiert.

4. Verfahren nach einem der vorstehenden Ansprüche, **dadurch gekennzeichnet, dass** die Beschichtung vor der Wärmebehandlung mindestens eine Schicht auf der Basis von mindestens einem Metall, Metalloid, Oxid, Nitrid, Carbid, Sulfid oder einer beliebigen Mischung von diesen vorweist.

5. Verfahren nach einem der vorstehenden Ansprüche, **dadurch gekennzeichnet, dass** die Längsrichtung (Y) der Laserlinie im Wesentlichen senkrecht zur Richtung (X) der Relativbewegung ist.

6. Verfahren nach einem der vorstehenden Ansprüche, **dadurch gekennzeichnet, dass** die Laserlinie stationär ist und das Substrat translatorisch in einer Richtung (X) quer zur Längsrichtung (Y) der Laserlinie bewegt wird.

7. Verfahren nach einem der vorstehenden Ansprüche, **dadurch gekennzeichnet, dass** die Leistung (Pₗₐₛ) der Laserlinie zeitlich moduliert wird, indem das elektrische Eingangssignal der oder jeder Laserquelle, die die Laserlinie bildet, zeitlich moduliert wird.

8. Verfahren nach Anspruch 7, **dadurch gekennzeichnet, dass** das Muster eine räumliche Periodizität aufweist und die zeitliche Modulationsfrequenz des elektrischen Eingangssignals der Laserquelle gleich dem Verhältnis der Geschwindigkeit der Relativbewegung zwischen dem Substrat und der Laserlinie bei der Periode des Musters ist.

9. Verfahren nach einem der Ansprüche 7 oder 8, **dadurch**
**gekennzeichnet, dass** sich die zeitliche Modulation des elektrischen Eingangssignals der Laserquelle während der Relativbewegung des Substrats und der Laserlinie ändert.

10. Verfahren nach einem der Ansprüche 7 bis 9, **dadurch gekennzeichnet, dass** die Laserlinie mit Hilfe mehrerer unabhängiger Laserquellen gebildet wird, wobei die zeitliche Modulation des elektrischen Eingangssignals von einer Laserquelle zu einer anderen, die die Laserlinie bildet, unterschiedlich ist.

11. Verfahren nach einem der vorstehenden Ansprüche, **dadurch gekennzeichnet, dass** die Laserlinie eine durchschnittliche Breite zwischen 10 µm und 1000 µm, vorzugsweise zwischen 30 µm und 200 µm, besitzt.

12. Verfahren nach einem der vorstehenden Ansprüche, **dadurch gekennzeichnet, dass** die mittlere Flächenleistung der Laserlinie in der Fokalebene größer oder gleich 10³ W/cm² ist.

13. Verfahren nach einem der vorstehenden Ansprüche, **dadurch gekennzeichnet, dass** die oder jede Laserquelle, die die Laserlinie bildet, eine kontinuierliche oder quasi-kontinuierliche Quelle ist.

14. Verfahren nach einem der Ansprüche 1 bis 12, **dadurch gekennzeichnet, dass** die oder jede Laserquelle, die die Laserlinie bildet, eine gepulste Quelle ist und die Leistung der ausgesendeten Pulse zeitlich moduliert wird.

15. Verfahren nach einem der vorstehenden Ansprüche, **dadurch gekennzeichnet, dass** die Laserlinie stationär ist und das Substrat mindestens eine erste Dimension (L; C1) und eine zweite Dimension (ℓ; C2) quer zueinander besitzt, wobei das Verfahren mindestens einen ersten Schritt und einen zweiten Schritt umfasst, wobei z. B.:
- im ersten Schritt das Substrat translatorisch parallel zu seiner ersten Dimension (L; C1) und quer zur Längsrichtung (Y) der Laserlinie bewegt wird und die Leistung (Pₗₐₛ) der Laserlinie zeitlich moduliert wird;
- im zweiten Schritt das Substrat translatorisch parallel zu seiner zweiten Dimension (ℓ; C2) und quer zur Längsrichtung (Y) der Laserlinie bewegt wird und die Leistung (Pₗₐₛ) der Laserlinie zeitlich moduliert wird.

16. Verfahren nach einem der vorstehenden Ansprüche, **dadurch gekennzeichnet, dass** die Geschwindigkeit (v) der Relativbewegung mindestens 3 Meter pro Minute beträgt.

17. Verfahren nach einem der vorstehenden Ansprüche, **dadurch gekennzeichnet, dass** die Temperatur der Seite des Substrats, die der behandelten Beschichtung gegenüberliegt, während der Wärmebehandlung kleiner oder gleich 100 °C, insbesondere 50 °C und sogar 30 °C, ist.

18. Verfahren nach einem der vorstehenden Ansprüche, **dadurch gekennzeichnet, dass** die Beschichtung nach der Behandlung ein Muster mit räumlicher Modulation aus mindestens einer Eigenschaft aus elektrischer Leitfähigkeit, Emissionsgrad, Strahlungstransmission, Strahlungsreflexion, Strahlungsabsorption, Unschärfe, Farbkoordinaten, Hydrophilie, photokatalytischer Aktivität der Beschichtung vorweist.

19. Verfahren nach einem der vorstehenden Ansprüche, **dadurch gekennzeichnet, dass** es vor dem Schritt der Wärmebehandlung einen Schritt des Aufbringens der oder jeder Schicht der Beschichtung auf das Substrat umfasst.

20. Anlage zur Behandlung eines Substrats, das mit mindestens einer Beschichtung versehen ist, um in der Beschichtung ein Muster mit räumlicher Modulation mindestens einer Eigenschaft der Beschichtung zu erzeugen, **dadurch gekennzeichnet, dass** sie umfasst:
- eine oder mehrere Laserquellen sowie Formgebungs- und Umlenkoptiken, die geeignet sind, mindestens eine Laserlinie zu generieren,
- Bewegungsmittel, die dazu geeignet sind, im Betrieb eine Relativbewegung des Substrats und der Laserlinie in einer Richtung (X) quer zur Längsrichtung (Y) der Laserlinie zu erzwingen, während die Laserlinie auf die Beschichtung fokussiert ist,
- Mittel zur zeitlichen Modulation der Leistung der Laserlinie in Abhängigkeit von der Geschwindigkeit (v) der Relativbewegung und den Dimensionen des Musters entlang der Richtung (X) der Relativbewegung.

21. Substrat, insbesondere aus nicht gehärtetem Glas oder aus polymerem organischem Material, das durch das Verfahren nach einem der Ansprüche 1 bis 19 erhalten werden kann, wobei dieses Substrat auf mindestens einem Teil mindestens einer seiner Seiten mit einer kontinuierlichen Beschichtung versehen ist, die ein Muster mit räumlicher Modulation mindestens einer Eigenschaft der Beschichtung vorweist.

22. Substrat nach Anspruch 21, **dadurch gekennzeichnet, dass** die Fläche der kontinuierlichen Beschichtung, die das Muster mit räumlicher Modulation mindestens einer Eigenschaft der Beschichtung vorweist, größer oder gleich 1 m², vorzugsweise größer oder gleich 1,4 m², ist.

23. Substrat nach einem der Ansprüche 21 oder 22, **dadurch gekennzeichnet, dass** das Muster der Beschichtung aus einer Reihe von nebeneinander liegenden Linien oder Linienabschnitten gebildet ist, wobei sich der Wert der Beschichtungseigenschaft von einer Linie zur anderen ändert und eine charakteristische Dimension für die Änderung des Werts der Beschichtungseigenschaft quer zur Längsrichtung der Linien ein Vielfaches einer Nenngröße zwischen 10 µm und 1000 µm ist.

24. Substrat nach einem der Ansprüche 21 bis 23, **dadurch gekennzeichnet, dass** das Muster der Beschichtung ein Muster mit einer kontinuierlichen Variation der Beschichtungseigenschaft ist.

25. Substrat nach einem der Ansprüche 21 bis 24, das mit mindestens einer kontinuierlichen dünnen Schicht versehen ist, die nebeneinander liegende lineare Zonen, die unterschiedliche quadratische Widerstandswerte besitzen, umfasst.

26. Substrat nach einem der Ansprüche 21 bis 24, das mit mindestens einer kontinuierlichen dünnen Schicht versehen ist, die nebeneinander liegende lineare Zonen, die unterschiedliche Werte ihrer optischen oder energetischen Eigenschaften besitzen, umfasst.

27. Verwendung eines Substrats nach einem der Ansprüche 21 bis 26 in Einfach-, Mehrfach- oder Verbundverglasungen, Spiegeln, Innenraummöbelelementen, Wandverkleidungen, beschichteten elektronischen Geräten.

## Claims

1. A method for obtaining a substrate provided, on at least a part of at least one of its faces, with a coating having a pattern with spatial modulation of at least one property of the coating, **characterized in that** it comprises a step of heat treatment, by means of laser radiation, of a continuous coating deposited on the substrate, wherein the coating before heat treatment at least partially absorbs the laser radiation, this heat treatment step being such that the substrate is irradiated with the laser radiation focused on the coating in the form of at least one laser line, while keeping the coating continuous and without melting the coating, and a relative movement of the substrate and of the laser line focused on the coating is imposed in a direction (X) transverse to the longitudinal direction (Y) of the laser line, while temporally modulating, during this relative movement, the power (Pₗₐₛ) of the laser line depending on the speed (v) of relative movement and the dimensions of the pattern in the direction (X) of relative movement.

2. The method according to claim 1, **characterized in that** the coating before heat treatment is single-layer.

3. The method according to claim 1, **characterized in that** the coating before heat treatment is a stack of layers, at least one layer of which at least partially absorbs the laser radiation.

4. The method according to any one of the preceding claims,
**characterized in that** the coating before heat treatment has at least one layer based on at least one metal, metalloid, oxide, nitride, carbide, sulfide, or any mixture thereof.

5. The method according to any one of the preceding claims,
**characterized in that** the longitudinal direction (Y) of the laser line is substantially perpendicular to the direction (X) of relative movement.

6. The method according to any one of the preceding claims,
**characterized in that** the laser line is stationary and the substrate is translated in a direction (X) transverse to the longitudinal direction (Y) of the laser line.

7. The method according to any one of the preceding claims, **characterized in that** the power (Pₗₐₛ) of the laser line is temporally modulated by temporally modulating the electrical input signal of the or each laser source forming the laser line.

8. The method according to claim 7, **characterized in that** the pattern has a spatial periodicity and the temporal modulation frequency of the electrical input signal of the laser source is equal to the ratio of the relative speed of movement between the substrate and the laser line over the period of the pattern.

9. The method according to any one of claims 7 or 8, **characterized in that** the temporal modulation of the electrical input signal of the laser source varies during the relative movement of the substrate and the laser line.

10. The method according to any one of claims 7 to 9, **characterized in that** the laser line is formed using several independent laser sources, the temporal modulation of the input electrical signal being different from one laser source to another forming the laser line.

11. The method according to any one of the preceding claims,
**characterized in that** the laser line has an average width comprised between 10 µm and 1000 µm, preferably between 30 µm and 200 µm.

12. The method according to any one of the preceding claims,
**characterized in that** the average surface power density of the laser line in the focal plane is greater than or equal to 10³W/cm².

13. The method according to any one of the preceding claims,
**characterized in that** the or each laser source forming the laser line is a continuous or quasi-continuous source.

14. The method according to any one of claims 1 to 12, **characterized in that** the or each laser source forming the laser line is a pulsed source and the power of the emitted pulses is temporally modulated.

15. The method according to any one of the preceding claims, **characterized in that** the laser line is stationary and the substrate has at least a first dimension (L; C1) and a second dimension (ℓ ; C2) transverse to one another, the method comprising at least a first step and a second step such that:
- in the first step, the substrate is translated parallel to its first dimension (L; C1) and transversely to the longitudinal direction (Y) of the laser line, and the power (Pₗₐₛ) of the laser line is temporally modulated;
- in the second step, the substrate is translated parallel to its second dimension (ℓ; C2) and transversely to the longitudinal direction (Y) of the laser line, and the power (Pₗₐₛ) of the laser line is temporally modulated.

16. The method according to any one of the preceding claims,
**characterized in that** the relative speed (v) of movement is at least 3 meters per minute.

17. The method according to any one of the preceding claims,
**characterized in that,** during the heat treatment, the temperature of the face of the substrate opposite the treated coating is less than or equal to 100°C, especially 50°C and even 30°C.

18. The method according to any one of the preceding claims,
**characterized in that** the coating, once treated, has a pattern with spatial modulation of at least one property among electrical conductivity, emissivity, radiation transmission, radiation reflection, radiation absorption, haze, colorimetric coordinates, hydrophilicity, photocatalytic activity of the coating.

19. The method according to any one of the preceding claims,
**characterized in that** it comprises, prior to the heat treatment step, a step of depositing the or each layer of the coating on the substrate.

20. An installation for treating a substrate provided with at least one coating, with a view to creating in the coating a pattern with spatial modulation of at least one property of the coating, **characterized in that** it comprises:
- one or several laser sources as well as shaping and redirection optics capable of generating at least one laser line,
- movement means capable of imposing, during operation, a relative movement of the substrate and of the laser line in a direction (X) transverse to the longitudinal direction (Y) of the laser line, while the laser line is focused on the coating,
- means for temporal modulation of the power of the laser line depending on the speed (v) of relative movement and the dimensions of the pattern in the direction (X) of relative movement.

21. A substrate, in particular made of non-tempered glass or of organic polymer material, capable of being obtained by the method according to one of claims 1 to 19, this substrate being provided, on at least a part of at least one of its faces, with a continuous coating having a pattern with spatial modulation of at least one property of the coating.

22. The substrate according to claim 21, **characterized in that** the area of the continuous coating having the pattern with spatial modulation of at least one property of the coating is greater than or equal to 1 m², preferably greater than or equal to 1.4 m².

23. The substrate according to any one of claims 21 or 22,
**characterized in that** the pattern of the coating is formed of a series of juxtaposed lines or portions of lines, wherein the value of the property of the coating changes from one line to another and a characteristic dimension for changing the value of the property of the coating, taken transversely to the longitudinal direction of the lines, is a multiple of a nominal dimension comprised between 10 µm and 1000 µm.

24. The substrate according to any one of claims 21 to 23,
**characterized in that** the pattern of the coating is a pattern with continuous variation of the property of the coating.

25. The substrate according to any one of claims 21 to 24, provided with at least one continuous thin layer comprising juxtaposed linear zones having different square resistance values.

26. The substrate according to any one of claims 21 to 24, provided with at least one continuous thin layer comprising juxtaposed linear zones having different values of their optical or energy properties.

27. A use of a substrate according to any one of claims 21 to 26 in single, multiple or laminated glazed units, mirrors, interior furnishing elements, wall coverings, layered electronic devices.
